# EUROPEAN PATENT SPECIFICATION

(11) **EP 0 338 739 B1**
(45) Date of publication and mention of the grant of the patent: **22.06.1994**
(21) Application number: 89303747.3
(22) Date of filing: 14.04.1989
(51) Int. Cl.: C04B 40/00

(54) **A production method of fine grain ice and dry clathrate water for manufacturing of concrete/mortar, a production method of concrete/mortar, by using fine grain ice or dry clathrate water and concrete/mortar products manufactured by the production method of concrete/mortar**
Verfahren zur Herstellung von feinkörnigem Eis und trockenem Clathrat-Wasser zur Herstellung von Beton/Mörtel, Verfahren zur Herstellung von Beton/Mörtel unter Verwendung von feinkörnigem Eis oder trockenem Clathrat-Wasser und daraus hergestellte Beton/Mörtel-Produkte
Procédé de production de glace à grain fin et clathrate d'eau sec pour la production de béton/mortier, procédé de production de béton/mortier en utilisant de la glace à grain fin ou du clathrate d'eau sec et produits de ce béton/mortier

(30) Priority: 16.04.1988 JP 94308/88
(43) Date of publication of application: 25.10.1989
(60) Divisional application: 91117429.0
(73) Proprietor: MITSUI KENSETSU KABUSHIKI KAISHA, Chiyoda-ku Tokyo (JP); SHIIAI KEMUTEKKU KABUSHIKI KAISHA, Minato-ku Tokyo (JP); OOSAKA YUUKI KAGAKU KOGYO KABUSHIKI KAISHA, Oosaka-shi Oosaka-fu (JP)
(72) Inventor: Okamoto, Tadashi, Fujisawa-shi Kanagawa-ken (JP); Sato, Toru, Yotsukaido-shi Chiba-ken (JP); Kanbayashi, Taiji, Yamatotakada-shi Nara-ken (JP); Kato, Chuzo, Shinagawa-ku Tokyo (JP)
(74) Representative: Ablewhite, Alan James

(56) References cited:
- EP-A- 0 191 864
- EP-A- 0 241 554

## Description

### BACKGROUND OF THE INVENTION

This invention relates to a production method of fine grain ice or dry clathrate water for manufacturing of concrete/mortar, a production method of concrete/mortar by using fine grain ice or dry clathrate water and concrete/mortar products manufactured by the production method of concrete/mortar. Fine grain ice and dry clathrate water for manufacturing of concrete/mortar producted by this invention are used when concrete/mortar is manufactured by use of a small amount of water.

It is possible that concrete/mortar is easily manufactured by making use of fine grain ice or dry clathrate water at the place where it is difficult to supply with water.

In case where concrete/mortar is manufactured in a conventional method, much water is used than the amount of water necessary for hydration of cement in order to uniformly mix and temper cement and water and to keep good flowability as well. However, there is such an inconvenience in this method as strength and durability of concrete/mortar after solidification are lower than the concrete/mortar responded by use of the amount of water close to theoretical hydration quantity.

For this reason, the technique to mix cement or cement and aggregate with fine grain ice instead of water has been studied and became known. The features are as follows.
1)Since powder mixture can be performed with cement, mixing can be performed in low water cement ratio.
2)Loss in slump in proportion to the passage of time is small after mixing.
3)The control of temperature for mass concrete can be easily performed.

In case where this concrete mixing technique is applied actually, however, it is necessary to manufacture fine grain ice and this method is a question. In a conventional method, fine grain ice is obtained by crushing cube ice. In case where fine grain ice is obtained by crushing cube ice, the defects are as follows.
1) In case where a large amount of fine grain ice is fed, big plant equipping special devices such as an ice crusher and a slicer is necessary.
2) Fine grain ice must be kept at low temperature until it is used and an ice storing unit is necessary to do so. Therefore, the control of manufacturing process is troublesome and the cost is high.

### SUMMARY OF THE INVENTION

The inventors of the present invention have been studying in order to improve the conventional defects and found the following fact. And, the perfected the method. That is, when fine grain ice or dry clathrate water is used for cement mixture, concrete/mortar can be easily manufactured by a small amount of water without the above-mentioned unit. On this occasion, fine grain ice is made in such a manner that water is impregnated into water absorbent polymer, capable of keeping independent fine grain by incorporating water in the structure in water absorbing state, to freeze. And, dry clathrate water is made in such a manner that water is impregnated into the water absorbent polymer.

According to the present invention there is provided production method for concrete/mortar, comprising;
mixing cement or cement and aggregate with fine-grain particulate water, the fine-grain particulate water being formed by impregnating water into a fine-grain particulate water-absorbent polymer capable of retaining its separate fine-grain particulate form on incorporation of water; and
expelling the absorbed water from the fine-grain particulate water-absorbent polymer by the application of pressure so as to promote hydration of the surrounding cement.

The production method has the following characteristics.
1) Fine grain particulate water having stable particle size can be easily manufactured.
2) It is necessary to keep fine grain ice at low temperature until it is used and the particulate water can be used as it is or can be frozen just before mixture.
3) It is unnecessary to manufacture at specified place and manufacture can be easily performed at optional place in free time.
4) The method can be easily applied to an existing ready-mixed concrete plant.
5) Water can be transported as fine particles in the place where it is impossible to supply with water.

And, the production method of concrete/mortar in the present invention has the following characteristics.
1) Low water cement ratio of high strength concrete/mortar can be easily manufactured.
2) Continuous production is easy by extrusion molding and roller molding. And, products can be easily enlarged in length.
3) Since water absorbent polymer is mixed in, remarkable effect can be taken in the prevention of surface dew condensation and efflorescence.

### BRIEF DESCRIPTION OF THE DRAWINGS

Fig.1 is a view for showing a glass transition point of each monomer; and
Fig.2 is a view for showing the result of evaluation of water absorbent polymer in the examples 1 through 6 and the comparison examples 1 through 3.

### DESCRIPTION OF THE PREFERRED EMBODIMENTS

Water absorbent polymer for use in the present invention is obtained in such a manner that acrylic copolymer is dissolved in aliphatic hydrocarbon, acrylic acid and its alkali metalic salt aqueous solution are dispersed, polymerization is performed by W/O type suspension polymerization method and crosslinking is performed in the presence or absence of inorganic compound by means of cross-linking agent to dry.

Suitable acrylic copolymers to be used as dispersing agent when water absorbent polymer for use in the present invention is manufactured include copolymers in which the following are the components:
(a)alkyl acrylates or alkyl methacrylates, monomers in which the carbon number of alkyl groups is 8 or more than 8 are 40-95 weight percent;
(b) one or more than one kinds of monomers selected among acrylic acid derivatives or methacrylic acid derivatives or acrylic amide derivatives or methacrylic amide derivatives containing a carboxyl group, amino group, quarternary ammonium group or hydroxyl group are 5-40 weight percent;
(c)unsaturated monomers capable of copolymerizing with the above-mentioned (a),
(b) are 0-40 weight percent.

Alkyl acrylates or alkyl methacrylates in the component (a) are available if the carbon number of alkyl groups is 8 or more than 8 and monomers which are on sale and available easily are 2-ethylhexyl acrylate, 2-ethylhexyl methacrylate, lauryl acrylate, lauryl methacrylate, tridecyl acrylate, tridecyl methacrylate, mixture of lauryl acrylate and tridecyl acrylate, stearyl acrylate, stearyl methacrylate and the like.

In case where the component (a) is selected, the higher a glass transition point is, the harder to occur beads blocking is when dispersing agent is synthesized in O/W type suspension polymerization. Therefore, it is convenient. A glass transition point of each monomer will be shown in Fig.1.

For instance, 2-ethylhexyl methacrylate, lauryl acrylate, mixture of lauryl acrylate and tridecyl acrylate, tridecyl acrylate, stearyl acrylate, stearyl methacrylate and the like are available.

Acrylic acid derivatives or methacrylic acid derivatives or acrylic amide derivatives or methacrylic amide derivatives containing carboxyl group, amino group, quarternary ammonium group or hydroxyl group in the component (b) are acrylic acid, methacrylic acid, itaconic acid, dimethylaminoethyl acrylate, dimethylaminoethyl methacrylate, diethylaminoethyl acrylate, diethylaminoethyl methacrylate, acryloyloxyethyltrimethylammonium chloride, methacryloyloxyethyltrimethylammonium chloride, 2-hydroxyethyl acrylate, 2-hydroxyethyl methacrylate, 2-hydroxypropyl acrylate, 2-hydroxypropyl methacrylate, acrylamide, dimethylacrylamide, dimethylaminopropylacrylamide, dimethylaminopropylmethacrylamide, ac- rylamidepropyltrimethylammonium chrolide, methacrylamidepropyltrimethylammonium chrolide and the like.

Monomers in the component (c) are alkyl methacrylates in which a glass transition point is high, having affinity with aliphatic hydrocarbon solvent and the monomers in which the carbon number of alkyl group is less than 5 and vinyl acetate are given. For instance, methyl methacrylate, ethyl methacrylate, isopropyl methacrylate, n-butyl methacrylate, isobutyl methacrylate and vinyl acetate are given and methyl methacrylate, ethyl methacrylate and isobutyl methacrylate are proper.

The constitution ratio of the components (a), (b) and (c) largely influences dispersion solubility to aliphatic hydrocarbon solvent, colloid dispersibility of polymerization and property of water absorbent polymer, for instance, water absorbency, particle independence when water is absorbed, particle strength and particle size.

In general, the component (a) is 40-95 weight percent, the component (b) is 5-40 weight percent and the component (c) is 0-40 weight percent as a good value. It is better thing that the component (a) is 45-70 weight percent, the component (b) is 5-25 weight percent and the component (c) is 20-40 weight percent. In case where the component (a) is less than 40 weight percent, the dispersion solubility to solvent is lowered. In case where the component (a) is more than 95 weight percent, the colloid dispersibility relatively gets worse when the component (b) is less than 5 weight percent. In both cases, it is difficult to continue W/O type suspension polymerization. The component (a) has such a tendency that the higher the percentage by weight is in the boundary between 40 and 95, the better the dispersion solubility to solvent, particle independence of water absorbent polymer when water is absorbed and particle strength get. In case where the component (b) is less than 5 weight percent, the colloid dispersibility gets worse as described before. In case where the component (b) is more than 40 weight percent, the dispersion solubility to solvent is lowered. In both cases, it is difficult to continue W/O type suspension polymerization.

The component (b) has such a tendency that the higher the percentage by weight is in the boundary between 5 and 40, the better the colloid dispersibility of polymerization is and the more the water absorbing rate of water absorbent polymer accelerates. On the contrary, in this case, the particle independence when water is absorbed and the particle strength are lowered and the particle size gets fine. In the case where the component (c) is more than 40 weight percent, the ratio of the component (a) is relatively lowered and the dispersibility to solvent gets worse. The higher the percentage by weight is in the boundary between 0 and 40, the higher the particle strength of water absorbent polymer is.

Acrylic copolymer which is used as dispersing agent in the present invention is synthesized by means of an O/W type suspension polymerization method. In solution polymerization, there are a few cases where solvent remains or the function as dispersing agent is inferior by low molecular weight polymer. The example of O/W type suspension polymerization method is as follows. That is, partial saponified polyvinyl alcohol is heated and dissolved in ion exchange water, after the atmosphere is replaced with N₂, the solution in which initiator of azo type or peroxide type is dissolved is dropped and dispersed in the monomer of components (a), (b), (c) and the polymerization is finished by keeping heating. After cooling, solid matter is filtered and washed and beads-like acrylic copolymer, that is, dispersing agent is obtained by drying under reduced pressure.

The dispersing agent obtained by the above-described method is dispersed to and dissolved in the aliphatic hydrocarbon solvent of W/O type suspension polymerization. The quantity of dispersing agent is used in the 0.1 to 10 weight percent range to acrylic acid and its alkali metalic salt monomer and the better range is 0.5 to 5 weight percent. When the quantity of dispersing agent is less than 0.1 weight percent, the colloid dispersibility of polymerization is labilized. When it is more than 10 weight percent, the fineness of particle size becomes the factor of an economic demerit.

Acrylic acid and its alkali metalic salt aqueous solution for use in the present invention is adjusted in such a manner that acrylic acid monomer is partially neutralized by means of aqueous solution such as sodium hydroxide and potassium hydroxide. It is better in consideration of water absorbency power and safety that the degree of neutralization is 60 to 85%. And, the concentration of monomer in aqueous solution is 35 to 75 weight percent and the better concentration is 40 to 70 weight percent.

In the present invention, it is no difficulty that unsaturated monomer capable of copolymerizing with acrylic acid and its acrylic acid alkali metalic salt monomer is copolymerized with acrylic acid and its acrylic acid alkali metalic salt monomer in the boundary of the manufacture of water absorbent polymer.

In case where acrylic acid is polymerized with its alkali metalic aqueous solution by W/O type suspension polymerization method in the present invention, initiator is self-crosslinking type in which cross-linking agent monomer isn't used. Therefore, the better initiator is water soluble persulfate such as potassium persulfate and ammonium persulfate and hydrogen peroxide. The quantity of initiator for use is 0.1 to 2.0 weight percent to monomer and the better quantity is 0.2 to 1.0 weight percent.

Aliphatic hydrocarbon solvent of W/O type suspension polymerization in the present invention is aliphatic hydrocarbon such as n-pentane, n-hexane, n-heptane and n-octane, alicyclic hydrocarbon such as cyclohexane, methylcyclohexane and decalin. The better one is n-hexane, n-heptane and cyclohexane.

When water absorbent polymer is manufactured for the present invention, the other important factor is that cross-linking reaction is performed by means of cross-linking agent in the presence or in the absence of inorganic compound after W/O type suspension polymerization.

It is available that the cross-linking agent for use in the present invention is the compound having two or more than two functional groups capable of responding to carboxyl group (or carboxylate group). Such cross-linking agent is polygrycidyl ether such as ethylene glycol digrycidyl ether, polyethylene glycol digrycidyl ether and glycerin trigrycidyl ether, haloepoxy compound such as epi- chlorohydrine and a-methyl chlorohydrin, a kind of polyaldehyde such as glutaraldehyde and glyoxal and the like. The better one is ethylene glycol grycidyl ether.

The amount of additive of cross linking-agent differs in kinds of cross linkingagent and kinds of dispersing agent and the proper range is usually 0.05 to 2 weight percent to acrylic acid and its alkali metalic salt monomer. When the quantity of the above-described cross-linkingagent for use is less than 0.05 weight percent, the particle independence when water is absorbed and the particle strength are bad. When it is more than 2 weight percent, the cross-linking density is too high. Therefore, the water absorbency is remarkably lowered.

In case of cross-linking reaction, the particle independence when water is absorbed rises all the more for adding inorganic compound. Inorganic compound is, for instance, white carbon, talc, hydrotalcite, pulverized silica (commercially available under the trademark "Aerosil" made by NIPPON AEROSIL KABUSHIKI KAISHA). On this occasion, it is no difficulty that surface active agent is added. And, wellknown nonionic surface active agent and the like are used.

The method of cross-linking reaction is to add cross-linking agent during azeotropic distillation away and heating and drying under reduced pressure as well-known and the addition during azeotropic distillation away is easy.

The water absorbent polymer for use in the present invention is different from commercially produced polymer and shows particle independence when water is absorbed. The more the component (a) of acrylic copolymer as dispersing agent is and the more cross-linking agent is, the more effects are taken. It can therefore be presumed that slip of water absorbed polymer concerns the above-described particle independence. The component (a) of dispersing agent upgrades the water repellency of the water absorbed polymer and by upgrading the cross-linking rate of polymer, cross- linking agent increases water absorbing rate and decreases surface tacking. By these effects, the water absorbed beads-like polymer slips each other, gets pore and appears particle independence and flowability since water as binder is few.

Particulate water for production of concrete/mortar in the present invention is obtained in such a manner that the above-mentioned water absorbent polymer absorbs necessary quantity of water to freeze so as to keep independent fine grain. It is easily manufactured. Water can be absorbed up to the water absorbency of polymer (100 to 200 times of water absorbent polymer weight in ion exchange water). And, dry clathrate water for production of concrete/mortar is obtained only in such a manner that the above-mentioned water absorbent polymer absorbs necessary quantity of water. It is, however, desirable that the amount of water to be absorbed is less than half of the water absorbency of polymer in order to keep independent fine grain.

The particle size of the particulate water can be freely varied in 0.03 to 3.0 mm range by changing the particle size of water absorbent polymer and the amount of water to be absorbed and can be selected in accordance with working condition when cement is mixed.

Concrete/mortar is manufactured in such a manner that particulate water of the present invention is mixed with cement or cement and aggregate in powder condition and water is expelled to the outer portion by means of pressure molding or extrusion molding method so as to occur hydration with surrounding cement.

The production method of the present invention will now be explained in the following examples, by way of illustration only.

Water absorbency, particle size and particle independence when water is absorbed were obtained by the following operations as shown below.

The value of water absorbency in ion exchage water was obtained in such a manner that dry polymer 0.5g was dissipated in ion exchange water 1t, the swelling polymer weight (W) obtained by filtering by means of 80-mesh wire gauze after standing for twenty-four hours was measured and this value was divided by the original dry polymer weight (Wo). That is to say, it was decided that the water absorbency of ion exchange water (g/g) was W/Wo.

The value of the water absorbency of 0.9 % salt water was obtained in such a manner that dry polymer 0.2g was dispersed in 0.9 % salt water 60g, the swelling polymer weight (W) obtained by filtering by means of 100-mesh wire gauze after standing for twenty minutes was measured and this value was divided by the original dry polymer (Wo). That is, it was decided that the water absorbency of 0.9 % salt water (g/g) was W/Wo.

The particle size of water absorbent polymer (in dry condition) was measured by means of an automatic grading distribution measuring apparatus CAPA-300 made by HORIBA SEISAKUSHO KABUSHIKI KAISHA by using decanter method. And, it was decided that median on a basis of the area was particle size.

It was decided that the particle size of water absorbed polymer was the average obtained on a basis of the photographing of an optical microscope after ion exchange water 50cc was added to dry polymer 1.0g and the polymer absorbed all amount of water. The particle independence when water was absorbed was judged by the following standard.
o: Each particle is independent and has flowability.
A: Each particle is partially dependent and inferior in flowability.
x: Each particle shows gelation dependence perfectly and has no flowability.

The composition examples of dispersing agent (acrylic copolymer) will be shown hereinafter.

### The composition example 1

Ion exchange water 150g was fed in a 500ml separable flask equipping an agitator, a reflux condenser, a dropping funnel, a thermometer and a nitrogen gas introduction tube, partial saponified polyvinyl alcohol (GH-23 made by NIHON GOHSEI KAGAKU KABUSHIKI KAISHA) 0.2g was added as dispersing agent and the atmosphere was replaced with N₂ after heating and dissolution.

On the other hand, azobisdimethylvaleronitrile 1.0g was added to mixture of lauryl acrylate and tridecyl acrylate (LTA made by OHSAKA YUKI KAGAKU KABUSHIKI KAISHA) 32.5g, hydroxy ethyl methacrylate 10.0g and methyl methacrylate 17.5g in a conical flask in advance to dissolve, it was dropped in the above-mentioned separable flask for one hour under the condition of nitrogen bubbling, it was maintained for 5 hours at 65 c, the reaction was finished, the solid matter was filtered after cooling to wash and to dry under reduced pressure and the beads-like dispersing agent (1) was obtained.

### The composition example 2

The bead -like dispersing agent (2) was obtained by operating in the same way as the composition example 1 except using mixture of lauryl acrylate and tridecyl acrylate 25.0g, methacrylic acid 5.0g, dimethylaminoethyl methacrylate 5.0g and methyl methacrylate 17.5g.

### The composition example 3

The bead -like dispersing agent (3) was obtained by operating in the same way as the composition example 1 except using stearyl methacrylate 30g, dimethylaminopropyl methacrylamide 10.0g and methyl methacrylate 10.0g.

The examples of water absorbent polymer will be shown hereinafter.

### The example 1

N-hexane 360.7g and the dispersing agent (1) 4.32g were fed in a 1 1 separable flask equipping an agitator, a reflux condenser, a dropping funnel, a thermometer and a nitrogen gas introduction tube, temperature was rised to 500 to disperse and dissolve and the atomosphere was replaced with N₂.

On the other hand, acrylic acid 72.0g was partially neutralized by means of sodium hydroxide 32.2g dissolved in ion exchange water 103.6g in a conical flask in advance and potassium persulfate 0.24g was dissolved in under room temperature. This monomer aqueous solution was dropped in the above-described separable flask under the condition of nitrogen bubbling at an agitation speed of 300 rpm for an hour. After reflux for two hours, 30 % aqueous hydrogen peroxide 0.1 was added to and polymerization was perfectly finished by continuing reflux for an hour. Thereafter, ethylene glycol diglycidyl ether 0.73g was added to, azeotropic distillation away was performed to dry under reduced pressure after filtration and white bead -like polymer was obtained. And, there was few attachment of polymer in the separable flask.

The obtained dry polymer showed that the water absorbency to ion exchange water was 125 (g/g), the water absorbency to 0.9 % salt water was 33 (g/g), the particle size in dry condition was 120 µm and the particle size when water was absorbed was 480 /1.m. And, the particle independence when water was absorbed was shown.

### The examples 2 and 3

White bead -like polymer was obtained by operating in the same way as the example 1 except using the dispersing agent (2), (3) obtained in the composition examples 2, 3 instead of the dispersing agent (1) of the example 1. And, there was little attachment of polymer in the separable flask.

### The example 4

White bead -like polymer was obtained by operating in the same way as the example 1 except using cyclohexane instead of n-hexane of the example 1. And, there was little attachment of polymer in the separable flask.

### The examples 5-6

White bead -like polymer was obtained by operating in the same way as the example 1 except changing ethylene glycol diglycidyl ether 0.73g in the example 1 into 0.18g and 1.46g. And, there was little attachment of polymer in the separable flask.

### The comparison example 1

White bead -like polymer was obtained by operating in the same way as the example 1 except not adding ethylene glycol diglycidyl ether of the example 1. And, there was little attachment of polymer in the separable flask.

### The comparison example 2

White powdery polymer was obtained by operating in the same way as the example 1 by using sorbitan monolaurate instead of the dispersing agent (1) of the example 1. And, attachment of polymer at the wall surface and on the agitating blade in the separable flask was noted.

### The comparison example 3

Commercially available goods AQUALIC CA-W (made by NIHON SHOKUBAI KAGAKU KOGYO KABUSHIKI KAISHA)

The result of evaluation in the examples 1 through 6 and the comparison examples 1 through 3 will be shown in Fig.2

The examples of production methods of particulate water and concrete/mortar will be shown hereinafter.

### The example A (fine grain ice)

Drinking water 100kg was fed in a 100 vessel equipping an agitator and the water absorbent polymer 1.0kg of the example 1 was gradually added to during agitation. After water was absorbed, agitation was stopped and the fine grain polymer which absorbed water was ejected to freeze. Then, the freezed polymer became independent fine grain ice by simple mechanical operation and was agitated by a mixer in the following proportioning ratio and mortar was manufactured. cement : fine grain ice : quartz sand (bone dry) = 100 : 28 : 20

This mortar was formed into a plate which was 50mm wide and 12mm thick by a vacuum deaeration type extrusion molding machine. Five specimens which was 350mm long were made by using this plate and bending tension test was performed after curing at room temperature for 14 days. On this occasion, the bending tension strength (kg/cm²) was 185.3, 211.1, 237.2, 191.0 and 177.9 and the average was 200.5 kg/cm².

### The example B (fine grain ice)

After water was absorbed, powder mixture was performed in the following ratio by using frozen fine grain polymer by the same method as the above-described one.

cement : fine grain ice : quartz sand (bone dry) = 100 : 24 : 20 Thereafter, the plate which was 50mm wide and 12mm thick was formed by means of a vacuum deaeration type extrusion molding machine. The bending tension strength (kg/cm²) of this plate which was cured for 14 days at 20° c in a room was 249.5, 220.1 and 220.3 and the average was 230.0kg/_{cm}².

### The example C (fine grain ice)

After water was absorbed, powdery mixture was performed in the following ratio by using the frozen fine grain polymer in the same manner as the above-mentioned to form by a vacuum deaeration type extrusion molding machine.
cement : fine grain ice : quartz sand (bone dry) = 100 : 32 : 20

On this occasion, the bending tension strength (kg/cm²) of this plate after curing at 20 c in a room for 14 days was 176.8, 157.0 and 146.1 and the average was 160.0 kg/cm².

### The example D (dry clathrate water)

Drinking water 50kg was fed in a 100 vessel equipping an agitator and water absorbing polymer 1.0kg was gradually added during agitation. After water was absorbed, agitation was stopped to manufacture dry clathrate water. Using this dry clathrate water, agitation was performed by means of a mixer in the following proportioning ratio to manufacture mortar.
cement : dry clathrate water : quartz sand (bone dry) = 100 : 28 : 20

The bending test result of the plate manufactured and cured in the same manner as the above-mentioned example A by using this mortar was 218.4, 179.5 and 180.9 and the average was 192.9 kg/_{cm2.}

### The example E (dry clathrate water)

The same method as the example D was performed.

The bending test result of the plate in the following ratio was 241.5, 216.8 and 206.3 and the average was 221.5 kg/cm².
cement : dry clathrate water : quartz sand (bone dry) = 100 : 24 : 20

### The example F (dry clathrate water)

The same method as the example D was performed.

The bending test result of the plate in the following ratio was 166.3, 147.0 and 146.1 and the average was 153.1 kg/cm².
cement : dry clathrate water : quartz sand (bone dry) = 100 : 32 : 20

## Claims

1. A production method for concrete/mortar, comprising;
mixing cement or cement and aggregate with fine-grain particulate water, the fine-grain particulate water being formed by impregnating water into a fine-grain particulate water-absorbent polymer capable of retaining its separate fine-grain particulate form on incorporation of water; and
expelling the absorbed water from the fine-grain particulate water-absorbent polymer by the application of pressure so as to promote hydration of the surrounding cement.

2. A method according to claim 1 in which water is expelled from the fine-grain particulate water-absorbent polymer by means of pressure molding or extrusion molding.

3. A method according to claim 1 or claim 2 in which the particulate water is frozen.

4. A method according to any of claims 1 to 3 in which the fine grain particulate water-absorbent polymer is formed by water-in-oil suspension polymerisation of an aqueous solution of acrylic acid and an alkali metal salt thereof, in an aliphatic hydrocarbon solution of an acrylic copolymer, and cross-linking by means of a cross-linking agent, in the presence or absence of an inorganic compound.

5. A method according to Claim 4 in which the acrylic copolymer in hydrocarbon solution is prepared from:
(a) monomers of alkyl acrylate or alkyl methacrylate in which the carbon number of alkyl groups is 8 or more, 40-95 weight percent;
(b) one or more kinds of monomers selected among acrylic acid derivatives or methacrylic acid derivatives or acrylic amide derivatives or methacrylic amide derivatives containing a carboxyl group, amino group, quaternary ammonium group or hydroxyl group, 5-40 weight percent;
(c) unsaturated monomers capable of copolymerizing with the above-mentioned (a) and (b), 0-40 weight percent.

6. A method according to claim 4 or claim 5 wherein the cross-linking agent is ethylene glycol diglycidyl ether.

7. A method of preparing water in a particulate form comprising impregnating water into a fine-grain particulate water-absorbent polymer capable of retaining its separate fine-grain particulate form on incorporation of water, the polymer formed by water-in-oil suspension polymerisation of an aqueous solution of acrylic acid and an alkali metal salt thereof, in an aliphatic hydrocarbon solution of an acrylic copolymer, and cross-linking by means of a cross-linking agent and in the presence or absence of an inorganic compound.

8. A method according to Claim 7 in which the acrylic copolymer in hydrocarbon solution is prepared from:
(a) monomers of alkyl acrylate or alkyl methacrylate in which the carbon number of alkyl groups is 8 or more, 40-95 weight percent;
(b) one or more kinds of monomers selected among acrylic acid derivatives or methacrylic acid derivatives or acrylic amide derivatives or methacrylic amide derivatives containing a carboxyl group, amino group, quaternary ammonium group or hydroxyl group, 5-40 weight percent;
(c) unsaturated monomers capable of copolymerizing with the above-mentioned (a) and (b), 0-40 weight percent.

9. A method according to claim 7 or claim 8 in which the cross-linking agent is ethylene glycol diglycidyl ether.

10. Water in a particulate form prepared according to the method of any of claims 7 to 9.

11. Water in a particulate form according to claim 10 in which the particle size is from 0.03 mm to 3.0 mm.

## Patentansprüche

1. Verfahren zur Herstellung von Beton/Mörtel durch Vermischen von Zement oder Zement und Zuschlagstoff mit feinkörnigem teilchenförmigem Wasser, das durch Durchtränken eines feinkörnigen, teilchenförmigen Wasser absorbierenden Polymeren mit der Fähigkeit zur Erhaltung seiner getrennten, feinkörnigen, teilchenförmigen Form beim Einbau von Wasser mit Wasser gebildet wurde, und Austreiben des absorbierten Wassers aus dem feinkörnigen, teilchenförmigen, Wasser absorbierenden Polymeren durch Ausüben eines Drucks zur Föderung der Hydratation des umgebenden Zements.

2. Verfahren nach Anspruch 1, wobei Wasser aus dem feinkörnigen, teilchenförmigen, Wasser absorbierenden Polymeren durch Druckformen oder Strangpressen ausgetrieben wird.

3. Verfahren nach Anspruch 1 oder 2, wobei das teilchenförmige Wasser gefroren ist.

4. Verfahren nach einem der Ansprüche 1 bis 3, wobei das feinkörnige, teilchenförmige, Wasser absorbierende Polymere durch Wasser-in- ÖI-Suspensionspolymerisation einer wässrigen Lösung von Acrylsäure und eines Alkalimetallsalzes derselben in einer aliphatischen Kohlenwasserstofflösung eines Acrylcopolymeren und Vernetzen mit Hilfe eines Vernetzungsmittels in Gegenwart oder Abwesenheit einer anorganischen Verbindung hergestellt wurde.

5. Verfahren nach Anspruch 4, wobei das Acrylcopolymere in einer Kohlenwasserstofflösung aus
(a) 40 bis 95 Gew.-% Alkylacrylat- oder Alkylmethacrylatmonomeren mit 8 oder mehr Kohlenstoffatomen in der Alkylgruppe;
(b) 5 bis 40 Gew.-% einer oder mehrerer Art(en) von Monomeren, ausgewählt aus Acrylsäure- oder Methacrylsäurederivaten oder Acrylamid- oder Methacrylamidderivaten mit einer Carboxylgruppe, Aminogruppe,quarternären Ammoniumgruppe oder Hydroxylgruppe, und
(c) 0 bis 40 Gew.-% an ungesättigten Monomeren mit der Fähigkeit zur Copolymerisation mit den genannten Komponenten (a) und (b)
hergestellt wurde.

6. Verfahren nach Anspruch 4 oder 5, wobei das Vernetzungsmittel aus Ethylenglycoldiglycidylether besteht.

7. Verfahren zur Zubereitung von Wasser in Teilchenform durch Durchtränken eines feinkörnigen, teilchenförmigen, Wasser absorbierenden Polymeren mit der Fähigkeit zur Erhaltung seiner getrennten, feinkörnigen, teilchenförmigen Form beim Einbau von Wasser mit Wasser, wobei das Polymere durch Wasser-in-ÖI-Suspensionspolymerisation einer wässrigen Lösung von Acrylsäure und eines Alkalimetallsalzes derselben in einer aliphatischen Kohlenwasserstofflösung eines Acrylcopolymeren und Vernetzung mit Hilfe eines Vernetzungsmittels und in Gegenwart oder Abwesenheit einer anorganischen Verbindung hergestellt wurde.

8. Verfahren nach Anspruch 7, wobei das Acrylcopolymere in einer Kohlenwasserstofflösung aus
(a) 40 bis 95 Gew.-% Alkylacrylat- oder Alkylmethacrylatmonomeren mit 8 oder mehr Kohlenstoffatomen in der Alkylgruppe;
(b) 5 bis 40 Gew.-% einer oder mehrerer Art(en) von Monomeren, ausgewählt aus Acrylsäure- oder Methacrylsäurederivaten oder Acrylamid- oder Methacrylamidderivaten mit einer Carboxylgruppe, Aminogruppe,quarternären Ammoniumgruppe oder Hydroxylgruppe, und
(c) 0 bis 40 Gew.-% an ungesättigten Monomeren mit der Fähigkeit zur Copolymerisation mit den genannten Komponenten (a) und (b)
hergestellt wurde.

9. Verfahren nach Anspruch 7 oder 8, wobei das Vernetzungsmittel aus Ethylenglycoldiglycidylether besteht.

10. Wasser in teilchenförmiger Form, hergestellt nach dem Verfahren gemäß einem der Ansprüche 7 bis 9.

11. Wasser in teilchenförmiger Form nach Anspruch 10, wobei die Teilchengröße von 0.03 mm bis 3,0 mm beträgt.

## Revendications

1. Procédé de production de béton/mortier comprenant:
le mélange de ciment ou de ciment et de granulat avec de l'eau particulaire à cristaux fins, l'eau particulaire à cristaux fins étant formée en empreignant de l'eau dans une matière polymère absorbant l'eau particulaire à cristaux fins capable de maintenir sa structure particulaire propre à cristaux fins lorsque l'eau est incorporée; et
l'expulsion de l'eau absorbée de la matière polymère absorbant l'eau particulaire à cristaux fins par application d'une pression de manière à stimuler l'hydratation du ciment environnant.

2. Procédé selon la revendication 1, dans lequel l'eau est expulsée de la matière polymère absorbant l'eau particulaire à cristaux fins au moyen d'un moulage par pression ou d'un moulage par extrusion.

3. Procédé selon la revendication 1 ou la revendication 2, dans lequel l'eau particulaire est congelée.

4. Procédé selon l'une quelconque des revendications 1 à 3, dans lequel la matière polymère absorbant l'eau particulaire à cristaux fins est formée par une polymérisation en suspension du type eau dans huile d'une solution aqueuse d'acide acrylique et d'un de ses sels de métal alcalin dans une solution d'un copolymère acrylique dans un hydrocarbure aliphatique et réticulation à l'aide d'un agent de réticulation, en présence ou en absence d'un composé inorganique.

5. Procédé selon la revendication 4, dans lequel le copolymère acrylique en solution dans un hydrocarbure est préparée au départ de :
(a) monomères d'acrylate d'alkyle ou de méthacrylate d'alkyle dans lesquels le nombre d'atomes de carbone des groupements alkyles est 8 ou supérieur à 8, à raison de 40-95 pourcent en poids;
(b) une ou plusieurs sortes de monomères choisis parmi les dérivés de l'acide acrylique ou les dérivés de l'acide méthacrylique ou les dérivés de l'acrylamide ou les dérivés de la méthacrylamide contenant un groupement carboxylique, un groupement aminé, un groupement ammonium quaternaire ou un groupement hydroxyle, à raison de 5-40 pourcent en poids;
(c) monomères non saturés capable de co- polymériser avec les (a) et (b) mentionnés plus haut à raison de 0-40 pourcent en poids.

6. Procédé selon la revendication 4 ou la revendication 5, dans lequel l'agent de réticulation est le diglycidoxy éthane.

7. Procédé de préparation d'eau sous forme particulaire comprenant l'imprégnation d'eau dans une matière polymère absorbant l'eau particulaire à cristaux fins capable de retenir sa forme particulaire propre à cristaux fins lors de l'incorporation de l'eau, la matière polymère formée par polymérisation en suspension du type eau dans huile d'une solution aqueuse d'acide acrylique et d'un de ses sels de métal alcalin, dans une solution d'un copolymère acrylique dans un hydrocarbure aliphatique et la réticulation à l'aide d'un agent de réticulation et en présence ou en absence d'un composé inorganique.

8. Procédé selon la revendication 7, dans lequel le copolymère acrylique en solution dans un hydrocarbure est préparé au départ de:
(a) monomères d'acrylate d'alkyle ou de méthacrylate d'alkyle dans lesquels le nombre d'atomes de carbone des groupements alkyles est 8 ou supérieur 8, à raison de 40-95 pourcent en poids;
(b) une ou plusieurs sortes de monomères choisis parmi les dérivés de l'acide acrylique ou les dérivés de l'acide méthacrylique ou les dérivés de l'acrylamide ou les dérivés de la méthacrylamide contenant un groupement carboxylique, un groupement aminé, un groupement ammonium quaternaire ou un groupement hydroxyle, à raison de 5-40 pourcent en poids.
(c) monomères non saturés capable de co- polymériser avec les (a) et (b) mentionnés plus haut, à raison de 0-40 pourcent en poids.

9. Procédé selon la revendication 7 ou la revendication 8, dans lequel l'agent de réticulation est le diglycidoxy éthane.

10. Eau sous forme particulaire préparée suivant le procédé de l'une quelconque des revendications 7 à 9.

11. Eau sous forme particulaire selon la revendication 10, dans laquelle la taille des particules est comprise entre 0.03 mm et 3.0 mm.
